# EUROPEAN PATENT SPECIFICATION

(11) **EP 1 055 944 B1**
(45) Date of publication and mention of the grant of the patent: **17.08.2005**
(21) Application number: 00110898.4
(22) Date of filing: 23.05.2000
(51) Int. Cl.: G02B 5/30, G02F 1/1335, F21V 5/02

(54) **Polarizing element and optical element**
Polarisierendes Element und optisches Element
Element de polarisation et element optique

(30) Priority: 24.05.1999 JP 14349399
(43) Date of publication of application: 29.11.2000
(73) Proprietor: NITTO DENKO CORPORATION, Osaka (JP)
(72) Inventor: Nakajima, Toshio, c/o Nitto Denko Corporation, Ibaraki-shi, Osaka (JP); Aizawa, Kaoru, c/o Nitto Denko Corporation, Ibaraki-shi, Osaka (JP); Inoue, Yasushi, c/o Nitto Denko Corporation, Ibaraki-shi, Osaka (JP)
(74) Representative: Grünecker, Kinkeldey, Stockmair & Schwanhäusser Anwaltssozietät

(56) References cited:
- EP-A- 0 588 504
- EP-A- 0 881 509
- EP-A- 0 908 745
- WO-A-94/29765
- US-A- 4 796 160
- US-A- 5 184 881
- US-A- 5 481 385
- US-A- 5 627 926
- US-A- 5 721 603
- US-A- 5 828 488
- US-A- 6 074 741
- PATENT ABSTRACTS OF JAPAN vol. 1996, no. 08, 30 August 1996 (1996-08-30) & JP 08 094833 A (JAPAN SYNTHETIC RUBBER CO LTD), 12 April 1996 (1996-04-12)
- PATENT ABSTRACTS OF JAPAN vol. 1999, no. 03, 31 March 1999 (1999-03-31) -& JP 10 319233 A (NITTO DENKO CORP), 4 December 1998 (1998-12-04)

## Description

### FIELD OF THE INVENTION

The present invention relates to a polarizing element and an optical element, which is capable of efficiently assembling a thin, light and high brightness liquid crystal display, etc.

### BACKGROUND OF THE INVENTION

Liquid crystal displays having improved brightness in the direction toward the front, i.e., the direction vertical to the front surface, is known, in which a lens sheet comprising a prism sheet is provided on a light guiding plate forming a backlight, etc. thereby to control the path of the emitted light. However, the provision of the lens sheet not only makes the display thicker but reduces the assembly efficiency of the display. With the spread of liquid crystal displays in diversity of fields, it has been keenly demanded to supply liquid crystal displays having further reduced thickness and weight while retaining their advantages. A direct view display device with an array of tapered waveguide on the viewer side is known from US 5 481 385. A prism plate for efficiently emitting light flux within a predetermined range and a liquid cristal indicator are known from US 5 627 926. A polarizing element according to the preamble of claim 1 of the present application is disclosed in US 5 828 488.

### SUMMARY OF THE INVENTION

An object of the present invention is to provide a polarizing element and an optical element, which is capable of forming a thin, light and high brightness liquid crystal display at high assembly efficiency.

The above object is accomplished by a polarizing element as defined in the appended claims.

### BRIEF DESCRIPTION OF THE DRAWING

Fig. 1 shows an example of the polarizing element according to the present invention, in which Fig. 1A is a cross sectional view, and Fig. 1B a plane view.
Fig. 2 is a cross sectional view of an example of the optical element according to the present invention.

### DETAILED DESCRIPTION OF THE INVENTION

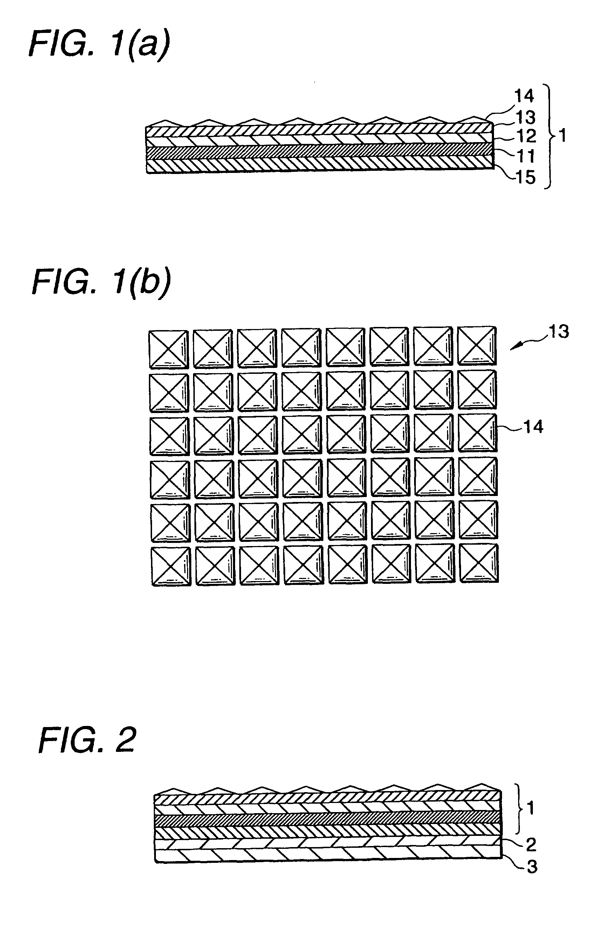

The polarizing element of the present invention comprises a polarizing film having on at least one side thereof a transparent protective layer having a large number of pyramidal or conical fine projections on its surface. The optical element of the present invention comprises a laminate of the polarizing element and at least one of a retardation film and a brightness improving film. An example of the polarizing element is shown in Fig. 1, and an example of the optical element is shown in Fig. 2.

According to the embodiment shown in Fig. 1, the polarizing element 1 comprises a transparent protective layer 15, a polarizing film 11, an adhesive layer 12 and a transparent protective layer 13 having fine projections 14 on its surface, in this order.

According to the embodiment shown in Fig. 2, the optical element comprises the polarizing element 1, an adhesive layer 2, and an optical film 3 which is a retardation film or a brightness improving film, in that order.

The polarizing film which can be used in the present invention is not particularly limited and can appropriately be selected from those capable of transmitting linearly polarized light having a prescribed axis of polarization and absorbing other light. Illustrative examples of useful polarizing films are those obtained by stretching a hydrophilic polymer film, such as a polyvinyl alcohol film, a partial polyvinyl formal film, or a partially saponified ethylene-vinyl acetate copolymer film, having adsorbed iodine and/or a dichroic dye; and polyene orientated films of dehydrated products polyvinyl alcohol or dehydrochlorinated products of polyvinyl chloride, etc. While not limiting, the polarizing film usually has a thickness of 5 to 80 µm.

The polarizing element is formed by providing a transparent protective layer on one or both sides of the polarizing film, and the transparent protective layer or at least one of the transparent protective layers has a great number of pyramidal or conical fine projections 14 as shown in Fig. 1. The transparent protective layer with the fine projections can efficiently be obtained from, for example, an optical path control sheet comprising a polymer sheet having on one or both sides thereof a large number of pyramidal or conical fine projections integrally formed of the same polymer as the polymer sheet.

The pyramidal or conical fine projections exhibit the function to regulate the optical path of the light having passed through the polarizing film to guide the transmitted light to the front direction. The form of the base of the pyramids or cones as the projections includes a triangle, a quadrangle, a polygon and a circle.

From the viewpoint of thickness reduction and light transmission, the base area of the individual projections is preferably as small as possible. The base area is preferably 0.25 mm² or less, more preferably 0.04 mm² or less and most preferably 0.01 mm² or less. Such fine projections can efficiently be formed by, for example, a method comprising etching a silicon wafer, etc., by a photolithographic technique, as is used in production of semiconductor chips, to form a negative mold (concave mold) for the fine projections of desired shape and transferring the concave projections of the negative mold to a polymer sheet, thereby forming a sheet having convex fine projections.

Application of the photolithographic etching system is advantageous in that fine projections are easily formed and the position and base area ratio of the fine projections are easily controllable. It is preferred that the total base area of the fine projections occupies 10 to 100% of the transparent protective layer per side from the standpoint of light collection efficiency and the like.

The base area or the shape of the pyramidal or conical projections may be approximately the same among the projections on one side or on both sides, or projections having different base areas or shapes may be combined on one or both sides.

The angle made between the base and the top of the projections, which concerns the controlled direction of the optical path, is preferably within a range of 55±10° based on quadrangular pyramidal projections from the point of light collecting property toward the front direction. While the more angular the vertices of the projections, the more preferred for optical path controllability, projections with somewhat rounded vertices or slightly cut vertices (making a trapezoid side view) are acceptable.

While the optical path control sheet may be provided on one or both sides of the polarizing film, such is usually provided on one side of the polarizing film 11 with its projections 14 outward as illustrated in Fig. 1. In this embodiment, a transparent protective layer 15 is usually, but according to necessity, provided on the other side of the polarizing film as shown in Fig. 1. In the practice, the polarizing element having the optical control sheet on one side thereof is usually arranged with the projections 14 facing a visually perceptible side (front side) of a liquid crystal display.

The transparent protective layer comprising the above-described light control sheet or the conventional transparent protective sheet is provided for the purpose of improving the waterproofness or strength of the polarizing film. Those protective layers are formed using appropriate transparent polymers. Polymers having excellent transparency, mechanical strength, heat stability, moisture shielding properties and the like are particularly preferably used.

Examples of such polymers include cellulosic polymers such as cellulose diacetate and cellulose triacetate; polyesters such as polyethylene terephthalate and polyethylene naphthalate; polyether sulfone, polycarbonate, polyamide, polyimide, polyolefins, acrylic resins; and thermosetting or ultraviolet-curing resins of acrylic, urethane, acrylurethane, epoxy or silicone type.

The transparent protective layer can be provided on the polarizing film by an appropriate method, such as a method of applying a polymer liquid or a method of laminating a film or an optical path control sheet via an adhesive. The thickness of the transparent protective layer can appropriately be selected and is usually 500 µm or smaller, preferably 1 to 300 µm, and more preferably 5 to 200 µm.

For practical use, the polarizing element of the present invention can be combined with one or more optical layers such as a retardation film and a brightness improving film, according to the intended use, to provide a desired optical element. For example, the optical element shown in Fig. 2 comprises the polarizing element 1 and an optical layer 3, which is a retardation film or a brightness improving film, adhered with a pressure-sensitive adhesive layer 2.

The retardation film which can be used in the present invention includes a film for compensating retardation due to a liquid crystal cell and a film having an appropriate retardation according to the use, such as a 1/2 wavelength film or a 1/4 wavelength film. Illustrative examples of useful retardation films include a birefringent film comprising a stretched film of various polymers, an orientated film of liquid crystal polymers of discotic or nematic type, and the orientated film supported on a film substrate. The film substrate supporting the orientated liquid crystal layer preferably includes those having excellent isotropy, such as cellulosic films.

The polymers forming the birefringent films include olefinic polymers such as polyethylene, polypropylene and polyolefins having a norbornene structure; polyesters; acrylic polymers such as polymethyl methacrylate; cellulosic polymers; polyamide, polyimide, polysulfone, polyether sulfone, polyether ether ketone, polyphenylene sulfide, polyvinyl alcohol, polyvinyl chloride, polyvinyl butyrate, polycarbonate, polystyrene, polyarylates, and polyoxymethylene. Of those, polymers having excellent crystallinity, such as polyesters and polyether ether ketone, are preferably used.

The polymer film may be subjected to an appropriate treatment such as uniaxial stretching or biaxial stretching. A birefringent film having its refractive index controlled in its thickness direction which is obtained by, for example, adhering a heat shrinkable film to the polymer film to impart shrinking force and/or stretching force is also useful. The retardation film may be a laminate of two or more retardation layers for the purpose of controlling optical characteristics such as retardation.

The brightness improving film has properties of reflecting linearly polarized light having a prescribed axis of polarization or circularly polarized light of a prescribed direction while transmitting other light of natural incident light and is sometimes called a polarized light separator. Such a brightness improving film can be applied to a reflection type liquid crystal display for use as a polarizing plate combining the function as a reflective layer for reflecting the incident light having passed through the liquid crystal cell to thereby improve the brightness of the display.

Where the brightness improving film is placed on a planar light source used as a backlight, it lets in the light from the backlight to obtain transmitted light in a prescribed polarized state while the reflected light is reversed by a reflective layer, etc., and let in the brightness improving film again. Part or the whole of the reflected light is transmitted in a prescribed polarized state to increase the amount of light passing through the brightness improving film. At the same time, the brightness improving film supplies polarized light which is hardly absorbed by an absorption type polarizing plate to thereby increase the amount of light utilizable for liquid crystal display, etc. Thus, the brightness improving film is capable of improving the brightness of liquid crystal displays of either transmission type or reflection type.

Accordingly, the brightness improving film which can be used includes films showing the characteristics of transmitting linearly polarized light having a prescribed axis of polarization while reflecting other light, such as a multi-layered thin film of dielectric material and a a laminate of thin films having layers having different refractive index anisotropy; and films showing the characteristics of reflecting either right-handed or left-handed circularly polarized light while transmitting other light, such as a cholesteric liquid crystal layer, especially an orientated film of a cholesteric liquid crystal polymer or such an orientated liquid crystal layer supported on a film substrate.

Of the above-described brightness improving films, the film of the type which transmits linearly polarized light having a prescribed axis of polarization makes the transmitted polarized light enter an absorption type polarizing plate with a regulated axis of polarization whereby the light is transmitted efficiently while minimizing the absorption loss by the absorption type polarizing plate. On the other hand, in case where the brightness improving film of the type which transmits circularly polarized light, such as a cholesteric liquid crystal layer, is used, while the transmitted circularly polarized light can be allowed to enter an absorption type polarizing plate as such to suppress the absorption loss, it is preferred that the transmitted circularly polarized light is converted into linearly polarized light through a retardation film and then allowed to enter the absorption type polarizing plate. Use of a 1/4 wavelength plate as the retardation film can convert the circularly polarized light to linearly polarized light.

A retardation film that can function as a 1/4 wavelength plate over a broad wavelength range of a visible light region or the like can be obtained by a method of combining a retardation layer functioning as a 1/4 wavelength plate to monochromatic light such as light having a wavelength of, e.g., 550 nm, and a retardation layer having other retardation characteristics, e.g., a retardation layer functioning as a 1/2 wavelength plate. Therefore, the retardation film interposed between the polarizing element and the brightness improving film may comprise one retardation layer or at least two retardation layers.

As for the cholesteric liquid crystal layer, two or more layers different in reflection wavelength can be combined to form a laminate structure, thereby obtaining a film capable of reflecting circularly polarized light over a broad wavelength range of, for example, the visible light region, and based on this, transmitted circularly polarized light having a broad wavelength range can be obtained.

As shown in Fig. 2, if required and necessary, the polarizing element 1 and at least one optical layer in the optical element can be adhered via an adhesive layer 2. While an appropriate adhesive layer can be used, a pressure-sensitive adhesive layer is generally preferably used from the standpoint of convenience in adhesion operation and thermal stability of the optical characteristics. Adhesion of the above-described transparent protective layer to the polarizing film to obtain the polarizing element can also be carried out by means of an appropriate adhesive layer, such as a pressure-sensitive adhesive layer. In case where a polyvinyl alcohol-based polarizing film is used, the adhesion is usually conducted with a polyvinyl alcohol-based adhesive.

The pressure-sensitive adhesive layer is formed using tacky substances or pressure-sensitive adhesives comprising, as a base polymer, acrylic polymers, silicone polymers, polyesters, polyurethanes, polyethers or synthetic rubbers. In particular, those which have excellent optical transparency as well as moderate tack characteristics such as wettability, cohesiveness and adhesiveness, and sufficient resistance to weather and heat so as not to cause lifting or peeling when exposed to heat or moisture, such as acrylic pressure-sensitive adhesives, are preferably used.

Examples of suitable acrylic pressure-sensitive adhesive include adhesives comprising, as a base polymer, acrylic polymers having a weight average molecular weight of 100,000 or more which are obtained by copolymerizing an alkyl (meth)acrylate having 20 or less carbon atoms in its alkyl moiety (e.g., methyl, ethyl or butyl ester) and an acrylic monomer comprising a modifier component such as (meth)acrylic acid or hydroxyethyl (meth)acrylate in a combination such that a glass transition temperature of the polymer is 0°C or lower. However, the acrylic pressure-sensitive adhesives are not limited to the above.

The pressure-sensitive adhesive layer can be adhered to either one or both sides of the polarizing element or of the optical layer. The pressure-sensitive adhesive layer may comprise a plurality of layers different in composition or kind. Where the pressure-sensitive adhesive layer is provided on both sides of the polarizing element or the optical layer, the pressure-sensitive adhesive layers applied to the front surface and the back surface may be the same or different in composition or kind.

The pressure-sensitive adhesive layer can be applied to the polarizing element or the optical layer by any convenient method. For example, a tacky substance or a composition thereof is dissolved or dispersed in an appropriate solvent such as toluene or ethyl acetate, or a mixture thereof to prepare a pressure-sensitive adhesive liquid having a concentration of about 10 to 40% by weight. The pressure-sensitive adhesive liquid is directly applied to the polarizing element or the optical layer by an appropriate spreading method such as casting method or coating method, or the pressure-sensitive adhesive liquid is applied to a separator according to the above method to form a pressure-sensitive adhesive layer, and the pressure-sensitive adhesive layer is then transferred on the polarizing element or the optical layer.

The thickness of the pressure-sensitive adhesive layer can appropriately be determined depending on the adhesive strength and the like, but the thickness is usually 1 to 500 µm. If required and necessary, the pressure-sensitive adhesive layer may be provided on the outer side of the polarizing element or the optical layer so that the polarizing element or the optical layer can be adhered to, for example, a liquid crystal cell. Where the pressure-sensitive adhesive layer is exposed on the surface of the element, it is preferable to temporarily cover the surface with a separator until use.

The pressure-sensitive adhesive layer may contain appropriate additives such as natural or synthetic resins, especially tackifying resins, fillers such as glass fibers, glass beads, metal powder and other inorganic powder, colorants, pigments and antioxidants. Further, fine particles may be incorporated to impart light scattering properties to the pressure-sensitive adhesive layer.

The polarizing element and the optical element according to the present invention can be used in various applications, such as liquid crystal displays. The liquid crystal displays can be designed without particular limitation so long as the polarizing element or the optical element of the present invention is used. For example, a variety of liquid crystal displays can be constructed using various types of available liquid crystal cells, such as an active matrix driving system represented by a thin film transistor type and a simple matrix driving system represented by a twisted nematic type or a supertwisted nematic type.

In making the liquid crystal display, appropriate parts such as a light-diffusing plate and a backlight can be arranged at appropriate positions in a single layer structure or a multi-layer structure. A lens sheet such as a prism array sheet or a lens array sheet can be omitted because the polarizing element or the optical element of the present invention can substitute therefor.

While the polarizing element or the optical element of the present invention may be arranged on either one or both sides of a liquid crystal cell, the optical element having the brightness improving film is usually set in the rear of a visually perceptible side, such as the backlight side of the liquid crystal cell. Further, the transparent protective layer having fine projections is generally arranged such that the fine projections face the visually perceptible side (front side). Where the polarizing element or the optical element is arranged on both sides of a liquid crystal cell, the two elements may be either the same or different.

The present invention will now be described in greater detail with reference to the following Examples, but it should be understood that the invention is not construed as being limited thereto.

### EXAMPLE 1

A silicon dioxide layer having a thickness of about 0.5 µm was formed on both sides of the (100) plane of a 0.2 to 0.6 mm thick silicon wafer by thermal oxidation. The silicon dioxide layer was etched through a photoresist mask. The etched layer was further subjected to anisotropic etching through a mask to form a female mold in a state that a large number of quadrangular pyramidal pits surrounded by (111) planes are arranged crosswise. The quadrangular pyramid as a pit had a vertical angle of 70.5° and an angle made by the base and the top of 54.7°.

A 80 µm thick cellulose triacetate (TAC) film was put on the silicon wafer female mold and pressed at 250°C for 30 minutes to obtain an optical path control sheet having fine quadrangular pyramidal projections having a vertical angle of about 70.5° and a base length of 30 µm orderly arranged crosswise. The total base area of the projections was 30% of the entire area of the sheet.

The optical path control sheet was adhered to one side of a polyvinyl alcohol-based polarizing film via a polyvinyl alcohol-based adhesive layer with the pyramidal projections outside, and a TAC film having a flat surface on both sides thereof was adhered to the other side of the polarizing film in the same manner to obtain a polarizing element.

### EXAMPLE 2

An optical path control sheet having quadrangular pyramids having a base length of 50 µm arranged crosswise in orderly lines at a total base area ratio of 50% was prepared in the same manner as in Example 1. A polarizing element was obtained by using the resulting optical path control sheet in the same manner as in Example 1.

### EXAMPLE 3

An optical path control sheet having quadrangular pyramids having a base length of 50 µm orderly arranged crosswise at a total base area ratio of 80% was prepared in the same manner as in Example 1. A polarizing element was obtained by using the resulting optical path control sheet in the same manner as in Example 1.

### COMPARATIVE EXAMPLE 1

A polarizing element was prepared in the same manner as in Example 1, except for replacing the optical path control sheet with a TAC film having a flat surface on both sides.

### Evaluation:

A liquid crystal display was assembled by using each of the polarizing elements obtained in Examples 1 to 3 and Comparative Example 1 on the visually perceptible side (front side) of a commercially available liquid crystal cell. The front brightness of the display was measured with a luminance meter (BM-7, manufactured by Topcon), and a degree of brightness improvement was evaluated taking the brightness of Comparative Example 1 as a standard. The results obtained are shown in the Table below. The Table also shows the degree of polarization by the polarizing element.

**TABLE**

| | Pyramidal Projections | | Degree of Polarization (%) | Degree of Brightness Improvement (%) |
|---|---|---|---|---|
| | Base Length (µm) | Total Base Area Ratio (%) | | |
| Example 1 | 30 | 30 | 99.9 | 130 |
| Example 2 | 50 | 50 | 99.9 | 140 |
| Example 3 | 50 | 80 | 99.9 | 160 |
| Comparative Example 1 | - | - | 99.9 | 100 |

While the invention has been described in detail and with reference to specific examples thereof, it will be apparent to one skilled in the art that various changes and modifications can be made therein without departing from the scope thereof as defined by the appended claims.

## Claims

1. A polarizing element (1) comprising a polarizing film (11) having on at least one side thereof a transparent protective layer (13) having on its surface a large number of fine projections (14) having an angle of 55±10° between the base and the top, **characterised in that** said fine projections (14) are quadrangular pyramids.

2. The polarizing element (1) as claimed in claim 1, wherein the total base area of said fine projections (14) is 10 to 100% of the entire area of said transparent protective layer (13).

3. The polarizing element (1) as claimed in claim 1, wherein said fine projections (14) are substantially the same or different in base area or base form.

4. An optical element comprising a polarizing element (1) according to claim 1 laminated with either one or both of a retardation film (3) and a brightness improving film (3).

## Patentansprüche

1. Polarisierendes Element (1), das einen polarisierenden Film (11) umfasst, der an wenigstens einer Seite eine transparente schützende Schicht (13) aufweist, die an ihrer Oberfläche eine große Anzahl feiner Vorsprünge (14) mit einem Winkel von 55 ± 10° zwischen der Basis und der Spitze hat, **dadurch gekennzeichnet, dass** die feinen Vorsprünge (14) viereckige Pyramiden sind.

2. Polarisierendes Element (1) nach Anspruch 1, wobei die gesamte Grundfläche der feinen Vorsprünge (15) 10 bis 100% der gesamten Fläche der transparenten schützenden Schicht (13) beträgt.

3. Polarisierendes Element (1) nach Anspruch 1, wobei die feinen Vorsprünge (14) bezüglich der Grundfläche oder der Basisform im Wesentlichen gleich oder verschieden sind.

4. Optisches Element, das ein polarisierendes Element (1) nach Anspruch 1 umfasst, das mit einem Retarderfilm (3) und/oder einem Helligkeitsverbesserungsfilm (3) laminiert ist.

## Revendications

1. Elément de polarisation (1) comprenant un film de polarisation (11) possédant, sur au moins l'une de ses faces, une couche de protection transparente (13) portant sur cette surface un grand nombre de fines parties saillantes (14) faisant un angle de 55 ± 10° entre la base et la partie supérieure, **caractérisé en ce que** lesdites parties saillantes fines (14) sont des pyramides quadrangulaires.

2. Elément de polarisation (1) selon la revendication 1, dans lequel la surface de base totale desdites fines parties saillantes (14) va de 10 à 100 % de la surface totale de ladite couche de protection transparente (13).

3. Elément de polarisation (1) selon la revendication 1, dans lequel lesdites fines parties saillantes (14) possèdent essentiellement la même surface de base ou forme de base ou une différence de base ou une forme de base différente.

4. Elément optique comprenant un élément de polarisation selon la revendication 1, superposé avec un film ou les deux films incluant un film de ralentissement (3) et un film (3) améliorant la luminosité.
